# DEMANDE DE BREVET EUROPEEN

(11) **EP 0 551 239 A1**
(43) Date de publication de la demande: **14.07.1993**
(21) Numéro de dépôt: 93420005.6
(22) Date de dépôt: 05.01.1993
(51) Int. Cl.: A23C 19/14, A01J 25/12

(54) **Fromage affiné découpé en portions**

(30) Priorité: 09.01.1992 FR 9200328
(71) Demandeur: Quillier, Roland, 63500 Bergonne (FR)
(72) Inventeur: Bertholet, David, F-63500 Perrier (FR); Quillier, Roland, F-63500 Bergonne (FR)
(74) Mandataire: Guerre, Dominique

(57) **Abrégé**

Préparation fromagère affinée à pâte molle, caractérisée en ce qu'elle comprend une pluralité de portions (1) fromagères, ayant été obtenues par découpe d'un seul et même fromage frais, mais affinées séparément les unes des autres, et finalement disposées et présentées ensemble de manière adjacente, pour reconstituer la forme d'un fromage (2) affiné à pâte molle traditionnel, par exemple, d'un gâperon.

## Description

La présente invention concerne la fabrication ou l'obtention de fromages, de manière artisanale ou industrielle. Plus précisément, l'invention se rapporte aux préparations fromagères, ou fromages affinés. Par préparation fromagère ou fromage affiné, on entend tout produit alimentaire obtenu à partir de lait d'un bovin, ovin ou caprin, par un procédé comprenant au moins les opérations suivantes :
(a) coagulation transformant le lait en caillé
(b) égouttage contractant le lait caillé pour séparer le lactosérum
(c) moulage du caillé égoutté, pour obtenir un fromage frais
(d) éventuellement pressage du fromage frais moulé
(e) affinage du fromage frais

et présenté à la consommation pour être découpé en tranches ou morceaux.

Appartiennent notamment à la définition précédente, les fromages à pâte molle, dont fromages sans croûte, fromages à croûte fleurie tels que gâperons, fromages à croûte lavée tels que munster, les fromages à croûte persillée, tels que roquefort, les fromages à pâte pressée non cuite.

La présente invention a pour objet une préparation fromagère ou fromage, limitant sa dessication une fois qu'il est entamé, et au cours de sa consommation, par exemple sur son plateau de présentation.

Une préparation fromagère selon l'invention comprend une pluralité de portions fromagères, ayant été obtenues par découpe d'un seul et même fromage frais, par conséquent moulé selon la forme dans laquelle il est présenté à la consommation, affinées séparément les unes des autres, et finalement disposées et présentées ensemble de manière adjacente, pour reconstituer la forme du même fromage mais affiné, par exemple d'un fromage traditionnel à pâte molle.

Préférentiellement, la préparation fromagère selon l'invention comprend quatre portions d'égale importance, ayant ensemble la forme d'une calotte.

Une préparation fromagère telle que définie précédemment peut être obtenue en :
- divisant une pâte fraîche, c'est-à-dire un caillé égoutté, en parties élémentaires de volume prédéterminé
- moulant chaque partie élémentaire pour obtenir un fromage frais
- découpant chaque fromage frais en une pluralité de portions
- affinant la pluralité de portions séparément les unes des autres
- et rassemblant les portions ainsi affinées, pour obtenir un fromage à pâte affinée, reconstitué quant à sa forme.

Ce procédé peut être mis en oeuvre, de manière automatique ou semi-automatique, avec une machine comprenant de manière générale :
- un poste de division d'une pâte fraîche alimentée en continu, en parties élémentaires moulées, pour obtenir des fromages frais de volume prédéterminé
- un poste de découpe de chaque fromage frais en une pluralité de portions à affiner séparément les unes des autres
- et un moyen de transfert des fromages frais du poste de division et moulage, au poste de découpe.

La préparation fromagère selon l'invention présente en outre l'avantage de supprimer l'effritement généralement rencontré à la coupe de tout fromage affiné, et de supprimer l'aspect dégradé obtenu généralement après la coupe de tout fromage affiné.

De manière exclusive, la présente invention est maintenant décrite pour la fabrication de fromages à pâte molle, par référence aux dessins annexés, dans lesquels :
- la figure 1 représente une préparation fromagère selon l'invention, sous forme rassemblée, reconstituant la forme d'un fromage affiné traditionnel à pâte molle, par exemple d'un gâperon
- la figure 2 représente la même préparation fromagère que celle représentée à la figure 1, dont les portions ont été affinées séparément les unes des autres
- les figures 3 et 4 représentent une vue d'un matériel d'obtention d'une préparation fromagère selon l'invention, respectivement de face et de dessus
- la figure 5 représente une vue de face du poste de division d'une pâte fraîche, en parties élémentaires moulées, pour obtenir des fromages frais de volume prédéterminé, c'est-à-dire dans la forme dans laquelle ils seront présentés à la consommation
- les figures 6 et 7 représentent une vue de face du poste de découpe de chaque fromage frais en une pluralité de portions, à affiner ultérieurement et séparément les unes des autres ; l'organe de découpe de ce poste est représenté en position basse à la figure 6, et en position haute à la figure 7
- la figure 8 représente une vue de dessus de la table de découpe et de l'organe de découpe, appartenant au poste de découpe représenté aux figures 6 et 7.

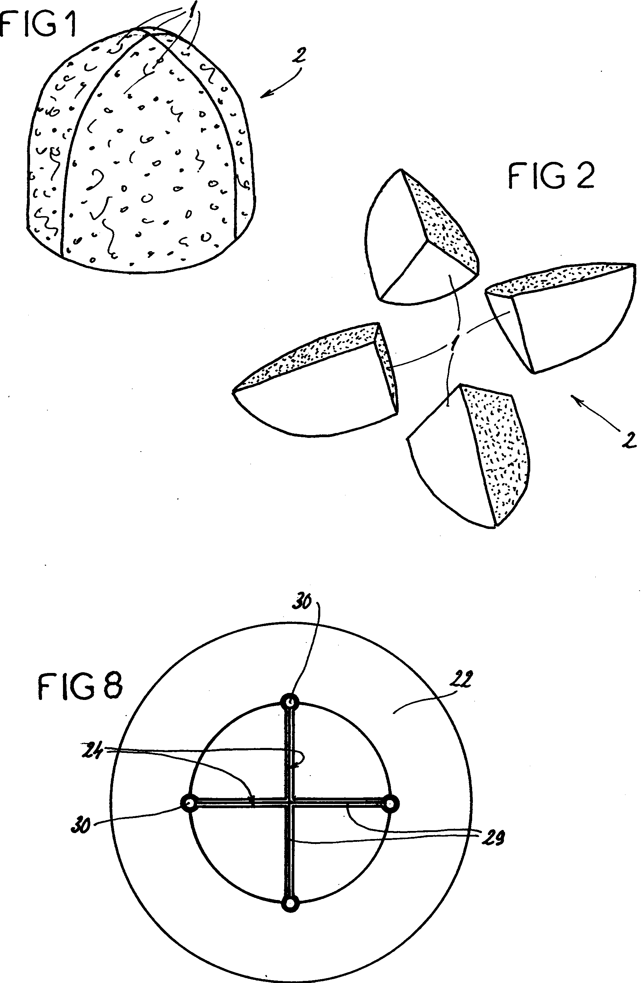

Conformément à la figure 2, après avoir divisé une pâte fraîche en parties élémentaires de volume prédéterminé, moulées chacune pour obtenir un fromage frais 2, on découpe ce dernier en une pluralité de portions 1. Ces dernières sont affinées séparément les unes des autres. Après affinage, on rassemble les portions 1 affinées, donc recouvertes complètement chacune par une croûte ou couche de moisissure externe, pour obtenir et reconstituer un fromage à pâte molle affinée, tel que représenté à la figure 1.

Ce fromage présente donc extérieurement l'aspect d'un fromage traditionnel, les différentes portions étant éventuellement séparées les unes des autres, par une feuille intercalaire de division ou protection.

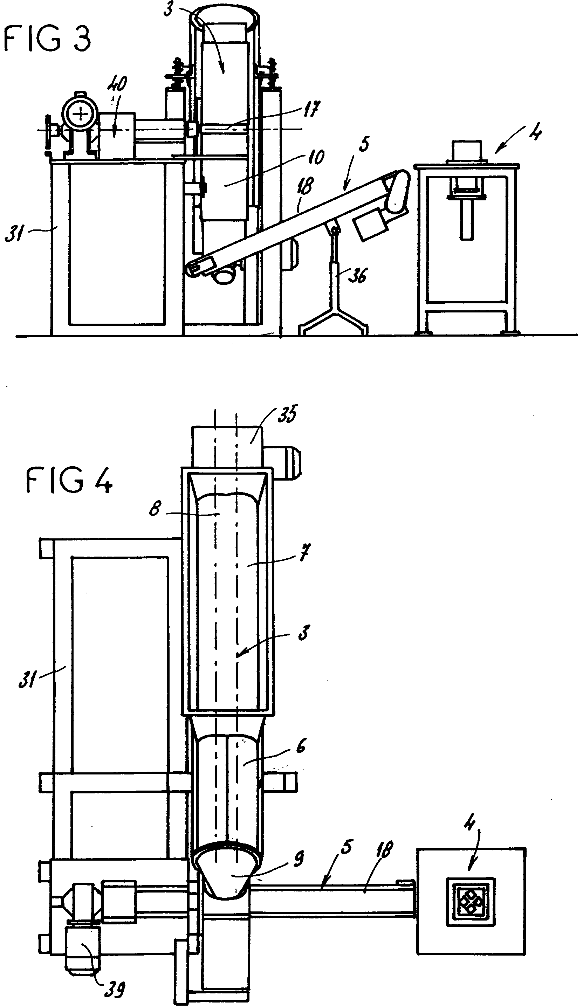

De manière générale, la machine d'obtention ou fabrication de cette préparation fromagère, avant affinage, est représentée selon les figures 3 à 8, et comprend :
- un poste 3 de division d'une pâte fraîche alimentée en continu, en parties élémentaires moulées, pour obtenir des fromages frais 23 de volume prédéterminé
- un poste 4 de découpe de chaque fromage frais 23 en une pluralité de portions à affiner séparément les unes des autres
- un moyen de transfert 5 des fromages frais, du poste 3 de division et moulage, au poste de découpe 4.

Le poste 3 de division et moulage de la pâte fraîche comprend :
- un châssis traditionnel, réalisé en tubes et profilés en acier inoxydable, construit de manière à avoir une bonne stabilité et être facilement nettoyé
- une extrudeuse 6 de la pâte fraîche montée de manière inclinée sur le châssis 31, par l'intermédiaire d'un axe bas 32 d'articulation et d'un piètement haut, monté de manière élastique verticalement sur le châssis 31 ; cette extrudeuse comporte en partie basse, une trémie d'alimentation 7, un moyen de mise en pression de la pâte alimentée par la trémie 7, par exemple deux vis 8 d'Archimède (représentées en traits pointillés à la figure 4), tournant en sens inverse, et en partie haute, une bouche 9 d'évacuation de la pâte mise en pression
- un carrousel 10 de moulage, comprenant une pluralité d'empreintes 11 élémentaires, identiques les unes aux autres, distribuées selon une ligne circonférencielle du carrousel, et ouvertes vers l'extérieur
- un poste de chargement 12 des différentes empreintes en pâte mise sous pression, situé sur le pourtour du carrousel 10, pour obtenir dans chaque empreinte une partie élémentaire moulée
- un poste de déchargement 13 des différentes parties élémentaires moulées, situé sur le pourtour du carrousel 10, après le poste de chargement 12 selon le sens de rotation 14 de ce dernier, pour obtenir les différents fromages frais 23 de volume élémentaire prédéterminé.

L'extrudeuse 6 comporte, outre les deux vis d'Archimède, un carter 34 les enfermant, constitué par deux parties démontables 34a et 34b, assemblées l'une sur l'autre. Les vis d'Archimède 8 sont commandées et entraînées en rotation par un moto-variateur électronique 35, de manière à permettre une modification du débit et de la pression de la pâte fraîche.

Le carrousel 10 est disposé verticalement, avec son axe de rotation 17 sensiblement horizontal, et comporte un voile 36 circonscrit par une jante 15, sur laquelle s'ouvrent les différentes empreintes 11, dans une direction radiale et centrifuge. En conséquence, le poste de chargement 12 est disposé à un point haut du carrousel, et le poste de déchargement 13, par simple gravité, à un point bas du même carrousel.

Pour obtenir un chargement étanche des différentes empreintes 11, au fur et à mesure de leur passage au débouché de la bouche 9 d'évacuation de la pâte, cette dernière comporte un sabot de remplissage, dont l'ouverture coopère en glissement relativement étanche avec la jante 15, et présente une extension circonférencielle correspondant à trois empreintes 11 adjacentes. De cette manière, il est possible de remplir trois empreintes successives, de manière relativement complète.

Le poste de déchargement 13 comprend un tapis de réception 18, situé à la verticale du point bas du carrousel 10, recevant chaque partie élémentaire se démoulant d'une empreinte 11 par gravité. Ce tapis 18 forme moyen de transfert 5 des fromages frais 23 ainsi obtenus, du poste de division et moulage 3, vers le poste de découpe 4 décrit ci-après. Il est supporté par un pied 36 et pourvu de ses propres moyens moteur 39. Une rampe 19 de prédémoulage est disposée avant le poste de déchargement 13, selon le sens 14 de rotation du carrousel, et l'écart entre la jante 15 de ce dernier et la rampe 19 en vis-à-vis croît selon le sens de rotation 14 vers le poste de déchargement 13. Cette disposition permet d'amorcer le démoulage, avant la séparation complète par gravité de chaque fromage frais 23, par rapport à chaque empreinte 11.

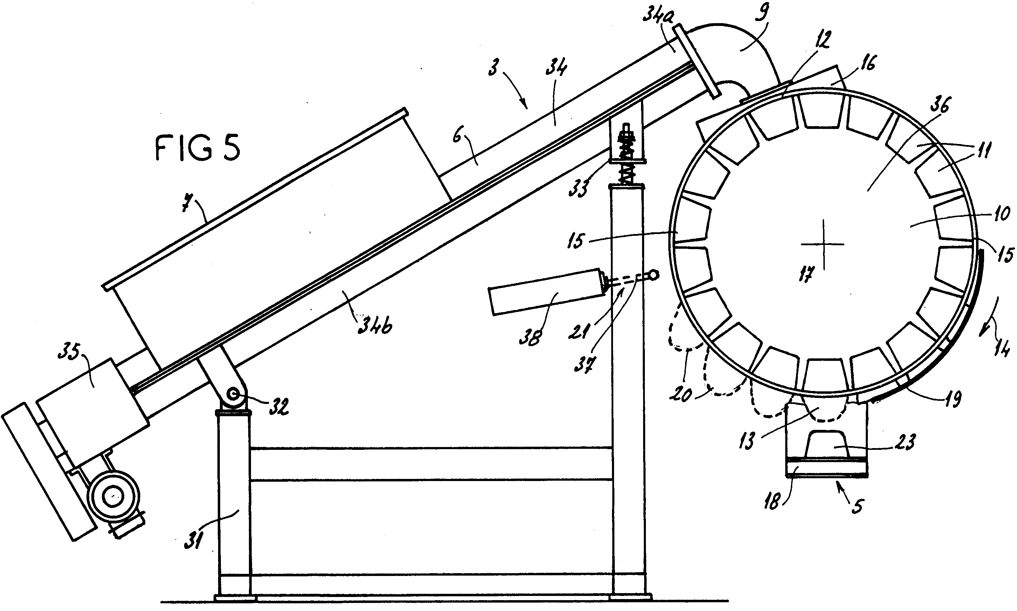

Par ailleurs, chaque empreinte 11 est protégée par un sac 20 perméable, en tissu pouvant être nettoyé par de la vapeur haute pression, adapté à un revêtement interne de chaque dite empreinte. De manière non représentée, la bordure de chaque sac 20 est fixée à demeure sur l'ouverture de chaque empreinte 20. Comme montré par la figure 5, après le poste de déchargement 13, les sacs 20 se trouvent retournés en pendant à l'extérieur de chaque empreinte 11. Avant le poste de chargement 12, toujours selon le sens de rotation 14 du carrousel 10, un poste 21, constitué par une tige 37 mue par un piston 38, permet de réintroduire les sacs 20 dans leurs empreintes respectives 11, après le poste de déchargement 13.

La rotation du carrousel 10 est obtenue par un ensemble mécanique 40 avec paliers, limiteurs de couple, moto-réducteurs freins, et une gamme de positionnement permettant de commander le pas de rotation du carrousel.

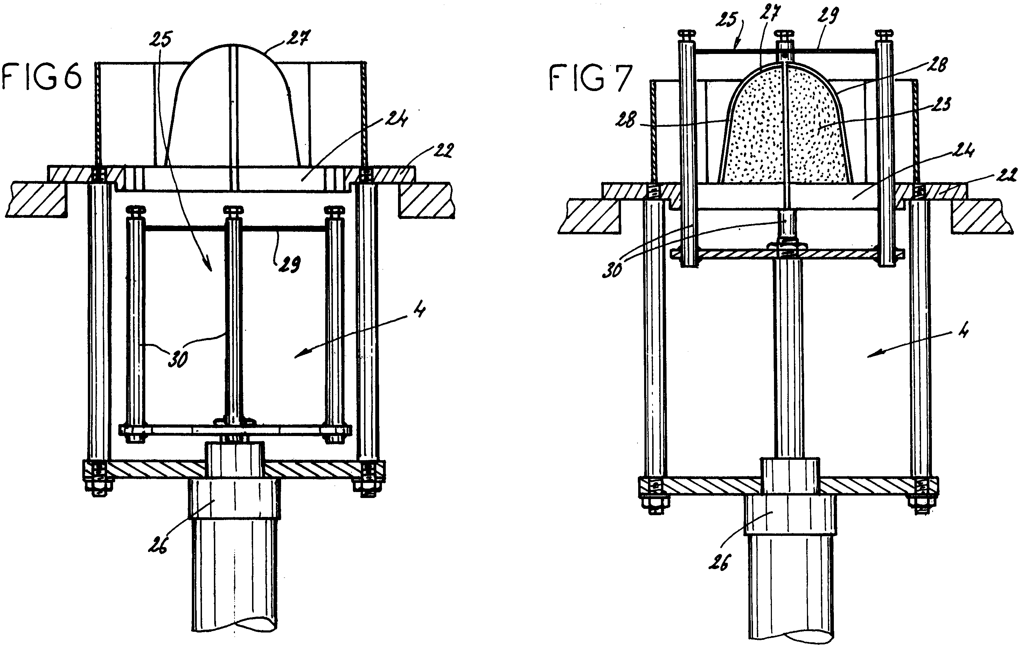

Le poste de coupe 4 de chaque fromage frais comprend :
- une table 22 pour le support du fromage frais à découper, comportant une perforation 24 de part en part, dont le profil à plat (cf figure 8), par exemple en croix, correspond au mode de partage ou découpe prédéterminé du fromage frais 23
- un organe de découpe 25 pour obtenir un profil de découpe correspondant au profil perforé de la table ; cet organe de découpe consiste en deux fils métalliques 29, disposés à angle droit l'un par rapport à l'autre, tendus chacun entre deux potences 30 ; l'organe de découpe 25 ainsi constitué est mobile verticalement entre une position haute (cf figure 7) au-dessus de la table 22, et au-delà de la perforation 24, ayant provoqué la découpe du fromage frais 23, et une position basse ou escamotée (cf figure 6), au-dessous de la table 22, et en-deçà de sa perforation 24 ; comme représentée à la figure 8, la table 22 est pourvue d'oeillères permettant le passage vertical des potences 30
- un moyen 26 de déplacement de l'organe de découpe 25, par exemple un vérin, entre sa position haute et sa position basse
- un organe de coiffe 27 du fromage frais pendant sa découpe, situé au-dessus de la table 22, comportant une pluralité d'éléments d'appui vertical contre le fromage, ayant chacun la forme d'une feuille de surface courbe adaptée à la surface extérieure convexe dudit fromage, ménageant entre eux un interstice, ayant en vue de dessus, un profil comparable à celui représenté à la figure 8 en ce qui concerne la perforation de la table 22 ; ce profil est donc adapté en correspondance avec le profil de découpe de l'organe de découpe 25, et le profil à plat de la perforation 24 de la table 22.

De manière accessoire et non représentée, la table 22 est équipée d'un guide de positionnement à plat du fromage frais.

Le poste de découpe précédemment décrit peut être commandé, en ce qui concerne la montée et la descente de l'organe de découpe 25, par une pédale actionnée par l'utilisateur.

## Revendications

**1 -** Préparation fromagère affinée, **caractérisée en ce qu'**elle comprend une pluralité de portions (1) fromagères, ayant été obtenues par découpe d'un seul et même fromage frais, affinées séparément les unes des autres, et finalement disposées et présentées ensemble de manière adjacente, pour reconstituer la forme d'un fromage (2) affiné traditionnel, par exemple d'un fromage à pâte molle.

**2 -** Préparation fromagère selon la revendication 1, caractérisée en ce qu'elle comprend quatre portions (1) ayant ensemble la forme d'une calotte.

**3 -** Procédé d'obtention d'une préparation fromagère selon la revendication 1, caractérisé en ce que :
- on divise une pâte fraîche en parties élémentaires de volume prédéterminé
- on moule chaque partie élémentaire pour obtenir un fromage frais
- on découpe chaque formage frais en une pluralité de portions
- on affine la pluralité de portions, séparément les unes des autres
- on rassemble les portions ainsi affinées pour obtenir un fromage à pâte affinée, reconstitué.

**4 -** Machine d'obtention d'une préparation fromagère selon la revendication 1, caractérisée en ce qu'elle comprend :
- un poste (3) de division d'une pâte fraîche alimentée en continu, en parties élémentaires moulées, pour obtenir des fromages frais (23) de volume prédéterminé
- un poste (4) de découpe de chaque fromage frais (23) en une pluralité de portions à affiner séparément les unes des autres
- un moyen de transfert (5) des fromages frais du poste de division et moulage, au poste de découpe.

**5 -** Machine selon la revendication 4, caractérisée en ce que le poste (3) de division et moulage de la pâte fraîche comprend :
- une extrudeuse (6) de la pâte fraîche comportant une trémie (7) d'alimentation, un moyen de mise en pression de la pâte alimentée, par exemple au moins une vis (8) d'Archimède, et une bouche (9) d'évacuation de la pâte mise en pression
- un carrousel (10) de moulage, comprenant une pluralité d'empreintes (11) élémentaires, distribuées selon une ligne circonférencielle, et ouvertes vers l'extérieur
- un poste de chargement (12) des différentes empreintes (11) en pâte mise sous pression, situé sur le pourtour du carrousel, pour obtenir dans chaque empreinte une partie élémentaire moulée
- un poste de déchargement (13) des différentes parties élémentaires moulées, situé sur le pourtour du carrousel, après le poste de chargement selon le sens de rotation (14) de ce dernier, pour obtenir les fromages frais (23) de volume élémentaire prédéterminé.

**6 -** Machine selon la revendication 5, caractérisée en ce que, pour le chargement des différentes empreintes (11), d'une part le carrousel (10) comporte une jante (15) sur laquelle s'ouvrent les différentes empreintes (11), dans une direction radiale et centrifuge, et d'autre part, la bouche d'évacuation (9) de l'extrudeuse (6) comporte un sabot (16) de remplissage, dont l'ouverture coopère en glissement relativement étanche avec la jante.

**7 -** Machine selon la revendication 5, caractérisée en ce que le carrousel (10) est disposé verticalement, avec son axe de rotation (17) sensiblement horizontal, le poste de chargement (12) est disposé à un point haut du carrousel, et le poste de déchargement (13) est disposé à un point bas dudit carrousel.

**8 -** Machine selon les revendications 5 et 6, caractérisée en ce que le poste de déchargement (13) comprend un tapis de réception (18), appartenant au moyen de transfert (5), situé à la verticale du point bas du carrousel (10), recevant chaque partie élémentaire se démoulant par gravité.

**9 -** Machine selon la revendication 8, caractérisée en ce qu'une rampe de prédémoulage (19) est disposée avant le poste de déchargement (13).

**10 -** Machine selon la revendication 5, caractérisée en ce que chaque empreinte (11) est protégée par un sac (20) perméable interne adapté à ladite empreinte, dont la bordure est fixée à demeure sur l'ouverture de ladite empreinte.

**11 -** Machine selon les revendications 9 et 10, caractérisée en ce qu'un poste de réintroduction (21) des sacs (20) dans leurs empreintes respectives (11) est disposé après le poste de déchargement (13), mais avant le poste de chargement (12) selon le sens de rotation (14) du carrousel (10).

**12 -** Machine selon la revendication 4, caractérisée en ce que le poste de découpe (4) de chaque fromage frais comprend :
- une table (22) pour le support du fromage frais (23), comportant une perforation (24) de part en part dont le profil à plat, par exemple en croix, correspond au mode de partage prédéterminé du fromage frais (23)
- un organe de découpe (25) dont le profil de découpe correspond au profil perforé de la table, mobile verticalement entre une position haute (figure 7) au-dessus de la table (22) et au-delà de ladite perforation (24), et une position basse (figure 6) au-dessous de la table (22), et en deça de ladite perforation (24)
- un moyen (26) de déplacement de l'organe de découpe, entre sa position haute et sa position basse
- un organe de coiffe (27) du fromage frais (23), au-dessus de la table (22), comportant une pluralité d'éléments (28) d'appui vertical, ménageant entre eux un interstice dont le profil vu de dessus est adapté en correspondance avec le profil à plat de la perforation (24) de la table (22), et avec le profil de découpe de l'organe de découpe (25).

**13 -** Machine selon la revendication 12, caractérisée en ce que la table (22) est équipée d'un guide de positionnement à plat du fromage frais (23).

**14 -** Machine selon la revendication 12, caractérisée en ce que les éléments (28) d'appui vertical de l'organe de coiffe (27) ont chacun la forme d'une feuille de surface courbe.

**15 -** Machine selon la revendication 12, caractérisée en ce que l'organe de découpe (25) consiste en un ou plusieurs fils (29) tendus, chacun entre deux potences (30).
